Europäisches Patentamt

European Patent Office

Office européen des brevets

(19)

(11) Veröffentlichungsnummer: **0 467 024 A1**

(12) **EUROPÄISCHE PATENTANMELDUNG**

(21) Anmeldenummer: **91106305.5**

(22) Anmeldetag: **19.04.91**

(51) Int. Cl.⁵: **F16L 55/162**

(30) Priorität: **19.07.90 DE 4022916**

(43) Veröffentlichungstag der Anmeldung:
**22.01.92 Patentblatt 92/04**

(84) Benannte Vertragsstaaten:
**AT BE CH DE FR LI LU NL**

(71) Anmelder: **Denso-Chemie Wedekind KG**
**Felderstrasse 24**
**W-5090 Leverkusen(DE)**

(72) Erfinder: **Baur, Fritz**
**Mittelstrasse 4**
**W-5419 Urbach(DE)**

(74) Vertreter: **Langmaack, Jürgen, Dipl.-Ing. et al**
**Patentanwälte Maxton . Maxton . Langmaack**
**Goltsteinstrasse 93 Postfach 51 08 06**
**W-5000 Köln 51(DE)**

(54) **Verfahren zur Abdichtung von Stossfugen an verlegten Rohrleitungen sowie Vorrichtung und Dichtungselement zur Durchführung des Verfahrens.**

㊼ Das Abdichten von erdverlegten, undichten Rohrleitungen bereitet insbesondere bei Nennweiten von 700 mm und weniger erhebliche Schwierigkeiten, da bei derartigen geringen Innendurchmessern die Rohre nicht mehr begehbar sind. Da die Rohrleitungen in Betrieb sind, bereitet das Abdichten der von innen zugänglichen Teile der Stoßfugen mit plastischen Massen Schwierigkeiten.

Gemäß der Erfindung wird daher zum Abdichten der vorbereiteten Stoßfuge zwischen zwei Rohrstücken jeweils ein elastisch verformbares ringförmiges Dichtungselement mit einem Außendurchmesser, der in unverspanntem Zustand im wesentlichen dem Durchmesser der abzudichtenden Stoßfuge entspricht, in radialer Richtung auf einen Außendurchmesser zusammengedrückt, der kleiner ist als der lichte Innendurchmesser des Rohres. Das so zusammengedrückte Dichtungselement wird dann in die Rohrleitung eingeschoben und an der abzudichtenden Stoßfuge durch Aufbringen einer im wesentlichen über den Innenumfang radial nach außen wirkenden Kraft in die Stoßfuge eingepreßt. Hierdurch ist es möglich, die Vorteile der Kompressionsdichtung, die auch bei einem wasserführenden Rohr eingebracht werden kann, für die Abdichtung nicht begehbarer Rohrleitungen auszunutzen.

Fig. 1

EP 0 467 024 A1

Die Erfindung betrifft ein Verfahren zum Abdichten von Stoßfugen von innen her an verlegten Rohrleitungen, insbesondere Betonrohrleitungen.

Aus Gründen des Boden- und Gewässerschutzes sind an erdverlegte Rohrleitungen, insbesondere Abwasserleitungen, erhöhte Anforderungen an deren Dichtigkeit zu stellen. Für die Neuverlegung von Rohrleitungen sind inzwischen Dichtungselemente aus elastomeren Materialien entwickelt worden, die allen Anforderungen, auch hinsichtlich der Standzeit genügen. Auch hierbei können jedoch Montagefehler auftreten, so daß an einem frisch verlegten Rohrstrang bei der Druckprüfung die eine oder andere Stoßfuge undicht ist. Bei älteren erdverlegten Rohrleitungen, insbesondere Betonrohrleitungen, wurde inzwischen festgestellt, daß diese im Bereich ihrer Stoßfugen teilweise undicht sind, so daß hier eine Abdichtung dringend geboten ist. Da in beiden Fällen eine Neuverlegung zu kostspielig ist, teilweise wegen der vorhandenen Überbauung und Überpflanzung gar nicht möglich ist, muß versucht werden, die Abdichtung hier von innen her zu bewirken.

Das Abdichten einer vorbereiteten, d.h. ausgefrästen Fuge bei begehbaren Rohrleitungen stellt kein Problem dar. Bei nicht begehbaren Rohrleitungen war es bisher nur möglich, mit Hilfe eines ferngesteuerten Kanalroboters die Fuge mit einer Dichtmasse auszuspritzen. Die Verwendung einer Dichtmasse ist jedoch wegen der hier gestellten Anforderungen an die Dauerelastizität und Dichtigkeit unter Druck problematisch. Ein weiterer Nachteil besteht darin, daß zumindest der Fugenbereich beim Einbringen der Dichtmasse trocken sein muß, was nur sehr schwer zu bewerkstelligen ist. Die Abdichtung mit Dichtungselementen aus einem elastomeren Material ist bisher nur bei begehbaren Rohrleitungen möglich gewesen.

Der Erfindung liegt nun die Aufgabe zugrunde, auch für nicht begehbare verlegte Rohrleitungen, insbesondere erdverlegte Rohrleitungen ein Verfahren zu schaffen, daß ein nachträgliches Einbringen eines Dichtungselementes aus einem elastisch verformbaren Material ermöglicht.

Diese Aufgabe wird dadurch gelöst, daß zum Abdichten der vorbereiteten Stoßfuge zwischen zwei Rohrstücken jeweils ein elastisch verformbares ringförmiges Dichtungselement mit einem Außendurchmesser, der in unverspanntem Zustand im wesentlichen dem Durchmesser der abzudichtenden Stoßfuge entspricht, in radialer Richtung auf einen Außendurchmesser zusammengedrückt wird, der kleiner ist als der lichte Innendurchmesser des Rohres, daß das Dichtungselement in dieser Form gehalten und in die Rohrleitung eingeschoben und daß das Dichtungselement an der abzudichtenden Stoßfuge durch Aufbringen einer im wesentlichen über den Innenumfang radial nach außen einwirkenden Kraft in die Stoßfuge eingepreßt wird. Hiermit wird es möglich, auch noch nachträglich in eine durch Ausfräsung über einen Kanalroboter vorbereitete Stoßfuge ein Dichtungselement aus einem elastomaren Material, in der Regel ein aus einer gegen Chemikalien beständigen Kunstkautschuk/Kunststoffmischung hergestellten Dichtungsring einzusetzen. Die Verwendung eines derartigen Dichtungsringes hat zum einen den Vorteil, daß nach den bisher mit diesen Materialien vorliegenden Erfahrungen die Dauerelastizität der Dichtung über Jahrzehnte hinaus gewährleistet ist. Da der Dichtungsring, anders als eine Dichtungsmasse, in die Stoßfuge eingepreßt wird und damit als Kompressionsdichtung ausgelegt ist, ergibt sich die Gewähr einer einwandfreien Abdichtung auch bei Einsatzfällen, bei denen aufgrund von möglichen Erdbewegungen ein gewisses "Arbeiten" der Stoßfuge in Betracht gezogen werden muß. Von Bedeutung ist hierbei, daß der unverspannte Dichtungsring in seinem Durchmesser dem Durchmesser der abzudichtenden Stoßfuge entspricht, so daß er nach dem Einpressen in Umgangsrichtung praktisch unverspannt in der Stoßfuge liegt und dementsprechend keine radial nach innen gerichteten Eigenbewegungen auftreten können. Ein besonderer Vorteil dieses Verfahrens besteht darin, daß die Abdichtungsarbeiten auch dann vorgenommen werden können, wenn die Rohrleitung noch einen geringen Abwasserstrom führt. Im Gegensatz zu Dichtmassen ist es für das erfindungsgemäße Verfahren nicht erforderlich, daß die abzudichtende Stoßfuge trocken ist.

In Ausgestaltung der Erfindung ist vorgesehen, daß eine Klemmkraft auf das Dichtungselement senkrecht zu seiner durch seine Ringform definierten Ebene beim radialen Zusammendrücken wirkt. Damit ist es ohne weiteres möglich, das zusammengedrückte und auf einen kleinen Durchmesser gehaltene Dichtungselement mit Hilfe einer entsprechend ausgebildeten Positioniervorrichtung in der Rohrleitung zu verfahren und zwar so, daß die Gestaltebene des Dichtungselementes in der Querschnittsebene des Rohres liegt. Da die abzudichtende Stoßfuge mit Hilfe einer Fernsehkamera an der ferngesteuerten Positioniervorrichtung angefahren wird, ist für das Einsetzen des Dichtungselementes eine genaue Positionierung in bezug auf die Rohrachse gewährleistet, so daß hier ein einwandfreies Einpressen des Dichtungselementes beim Lösen der Klemmkraft möglich ist.

In vorteilhafter Ausgestaltung der Erfindung ist vorgesehen, daß die Radialkraft zum Einpressen des Dichtungselementes im Bereich seiner durch seine Querschnittskontur definierten Mittelachse auf das Dichtungselement einwirkt. Durch diese Maßnahme ist gewährleistet, daß das Dichtungselement beim Einpressen in die Stoßfuge in bezug auf seine Querschnittskontur nicht "gestaucht" sondern "gezogen" wird. Hierdurch sind nicht nur geringere Radialkräfte zum Einpressen notwendig, sondern auch die Positionierung des Dichtungselementes in der Stoßfuge insgesamt wird hierdurch verbessert.

In Ausgestaltung der Erfindung ist vorgesehen, daß das ringförmige Dichtungselement durch Einpressen in einen Formkonus auf den kleineren Außendurchmesser radial zusammengedrückt wird und dann durch das Aufbringen einer Haltekraft senkrecht auf den kleinen Außendurchmesser gehalten wird. Diese Haltekraft kann beispielsweise durch einen den Außenumfang umgreifenden Spannring aufgebracht werden. Diese Verfahrensweise ermöglicht es, vor allem Dichtungselementen mit kleinem Durchmesser, die hohe Kräfte für das Zusammendrücken erfordern, für das Einführen in die Rohrleitung vorzubereiten. Sobald das Dichtungselement in der Rohrleitung positioniert ist, wird der Spannring abgeschoben und das Dichtungselement kann in die Fuge eingepreßt werden.

Der Erfindung liegt ferner die Aufgabe zugrunde, eine Vorrichtung zu schaffen zur Durchführung des Verfahrens zum Abdichten der Stoßfugen von innen her an verlegten Rohrleitungen, insbesondere Betonrohrleitungen, jeweils mit einem elastisch verformbaren ringförmigen Dichtungselement.

Die der Erfindung zugrundeliegende Aufgabe wird dadurch gelöst, daß an einer in der Rohrleitung längsbewegbaren Positioniervorrichtung im Abstand zueinander angeordnete und gegeneinander bewegbare, im wesentliche ringförmige Klemmbacken angeordnet sind, daß die Klemmbacken mit Mitteln zum Aufbringen einer Klemmkraft versehen sind, daß zwischen den Klemmbacken eine ringförmige Vorrichtung zum Halten und zum Einpressen des Dichtungselementes angeordnet ist, die gleichförmig allseitig radial bewegbar ausgebildet und mit einem Antrieb versehen ist. Mit Hilfe einer derartigen Vorrichtung ist es möglich, ein ringförmiges Dichtungselement in seinem Außendurchmesser zusammenzudrücken und über die Klemmbacken in diesem zusammengedrückten Zustand zu halten und damit über die Positioniervorrichtung in die Rohrleitung einzuführen, und zwar so einzuführen, daß die durch die Ringform des Dichtungselementes vorgegebene Gestaltebene mit der Querschnittsebene der Rohrleitung gleichgerichtet ist. Sobald das Dichtungselement über die Positioniervorrichtung in bezug auf die abzudichtende Stoßfuge ausgerichtet ist, was mit Hilfe einer Fernsehkamera geschehen kann, wird das Dichtungselement unter Lösen der Klemmbacken über die Preßvorrichtung in die Fuge eingepreßt, wobei sich das Dichtungselement im wesentlichen auf seinen ursprünglichen Außendurchmesser aufweitet und damit, in Umfangsrichtung gesehen, praktisch zugspannungsfrei in der Stoßfuge angeordnet ist.

In Ausgestaltung der erfindungsgemäßen Vorrichtung ist vorgesehen, daß die Halte- und Preßvorrichtung mehrere sich teilweise überlappende Ringsegmente aufweist. Diese Anordnung hat den Vorteil, daß die radial wirkende Preßkraft auf das einzupressende Dichtungselement gleichmäßig einwirkt, wobei durch die Überlappung der beim Preßvorgang auftretenden Vergrößerung des Außenumfanges der Ringsegmente Rechnung getragen wird. Die Segmente sind an ihrer Außenkontur so geformt, daß sie in der Endstellung, d.h. im großen Durchmesser eine Außenkontur aufweisen, entsprechend der Kontur des Rohr- bzw Fugenquerschnitts.

In vorteilhafter weiterer Ausgestaltung der erfindungsgemäßen Vorrichtung ist ferner vorgesehen, daß die Ringsegmente der Halte- und Preßvorrichtung zumindest an ihrem dem Dichtungselement zugekehrten Bereich schneidenförmig ausgebildet sind. Diese Ausgestaltung hat den Vorteil, daß die Preßkraft nicht am Innenumfang des Dichtungselementes aufgebracht wird und dieses beim Einpressen staucht, sondern daß ein mit einem sich nach innen öffnenden, umlaufenden Schlitz versehenes Dichtungselement verwendet werden kann. Die schneidenförmig ausgebildeten Teile der Ringsegmente greifen hierbei in diesen Schlitz ein, so daß beim Aufbringen der Preßkraft diese im Grund des Schlitzes auf das Dichtungselement übertragen wird, so daß das Dichtungselement in die Fuge in radialer Richtung gesehen "eingezogen" wird.

In zweckmäßiger Ausgestaltung ist hierbei vorgesehen, daß jeweils benachbarte schneidenförmige Teile sich teilweise überlappen. Hierdurch ist gewährleistet, daß die umlaufende Schneidenkante der Halte- und Preßvorrichtung beim Aufbringen der Radialkraft ohne Unterbrechung im Grund des Schlitzes des Dichtungselementes anliegt. Die schneidenförmige Ausbildung hat zugleich den Vorteil, daß das auf die umlaufende Schneide aufgesetzte Dichtungselement beim Zusammendrücken nicht nur über die Klemmbackenflächen sondern zugleich auch über die Schneidenflächen gehalten wird, da das Dichtungselement von beiden Seiten auf die Schneidenflächen gepreßt wird. Wird dann das Dichtungselement mit Hilfe der Schneiden der Halte- und Preßvorrichtung in die abzudichtende Stoßfuge unter Lösen der Klemmbacken "eingezogen", wie vorstehend beschrieben, dann wird das Dichtungselement von den Seitenwänden der Stoßfuge zwar wieder gegen die Schneidenflächen gepreßt. Da jedoch die Schneidenflächen glattflächig sind, während die Fugenwandungen rauh sind, kann zum einen eine Relativverschiebung zwischen Schneidenflächen und der an den Schneidenflächen anliegenden Flächen des Dichtungselementes erfolgen, was den vorstehend beschriebenen Einziehvorgang bewirkt. Nachdem das Dichtungselement vollständig in die Fuge eingezogen worden ist, muß die Halte- und Preßvorrichtung wieder in umgekehrter Richtung sich radial nach innen bewegend betätigt werden. Aufgrund der höheren Haftung zwischen dem Material des Dichtungselementes und der Seitenwandung der Fuge, kann dann die Schneide der Halte- und Preßvorrichtung aus dem Schlitz des Dichtungselementes herausgezogen werden. Durch das Aufbringen von üblichen Gleitmitteln auf die Schneide vor dem Aufsetzen des Dichtungselementes kann dieser Vorgang noch verbessert werden. Aufgrund der unterschiedlichen Gleitfähigkeit ist auf jeden Fall sichergestellt, daß das Dichtungselement in der vorgegebenen Position in der Fuge verbleibt.

In vorteilhafter Ausgestaltung der erfindungsgemäßen Vorrichtung ist vorgesehen, daß die ringförmigen Klemmbacken jeweils in Ringsegmente unterteilt sind und daß Klemmbackensegmente gegenüber den Ringsegmenten der Halte- und Preßvorrichtung in radialer Richtung relativ bewegbar gehalten sind. Diese Anordnung hat den Vorteil, daß die Klemmbacken bereits seitlich am ringförmigen Dichtungselement anliegen, bevor dieses radial zusammengedrückt wird. Hierdurch wirken die Klemmbacken zugleich als Abstützung, während das ringförmige Dichtungselement von seinem ursprünglichen entspannten Durchmesser auf einen Durchmesser zusammengedrückt wird, der kleiner ist als der lichte Innendurchmesser der abzudichtenden Rohrleitung. Beim Einpressen in die Fuge wirken die Klemmbacken dann als Führung. Zweckmäßig wird die Klemmkraft schon zu Beginn aufgebracht, so daß der Vorgang des Zusammendrückens hierdurch unterstützt werden kann.

In weiterer vorteilhafter Ausgestaltung der erfindungsgemäßen Vorrichtung ist vorgesehen, daß die jeweils einander zugeordneten, das Dichtungselement zwischen sich einklemmenden Klemmbackensegmente im Bereich ihrer Außenumfangskante jeweils einen gegen das Dichtungselement vorspringenden Steg aufweisen. Diese Anordnung hat den Vorteil, daß das Dichtungselement auf die Schneiden der Halte- und Preßvorrichtung aufgezogen werden kann und die Stege der Klemmbackensegmente das aufgezogene Dichtungselement im Bereich seines Außenumfanges von beiden Seiten her übergreifen können. Die Klemmbackensegmente sind hierbei mit den Ringsegmenten der Halte- und Preßvorrichtung trotz ihrer relativen Bewegbarkeit zueinander formschlüssig gekoppelt, so daß bei der radial nach innen gerichteten Bewegung der Ringsegmente der Halte- und Preßvorrichtung die Klemmbackensegmente mitgenommen werden. Über die gegeneinander gerichteten Stege der Klemmbackensegmente wird hierbei die zum Zusammendrücken des Dichtungselementes auf einen kleineren Durchmesser erforderliche Kraftwirkung von außen übertragen. Die auf die Klemmbackensegmente wirkende Klemmkraft in Verbindung mit den Stegen bewirkt, daß das Dichtungselement in dem zusammengedrückten Zustand gehalten wird. Zum Einbringen in die Stoßfuge wird dann, wie vorstehend bereits beschrieben, über die Ringsegmente der Halte- und Preßvorrichtung eine radial nach außen wirkende Kraft auf das Dichtungselement aufgebracht, wobei entweder die Klemmkraft gelöst wird oder die Haltewirkung der Stege unter Verformung des Dichtungselementes überwunden wird.

In einer vorteilhaften Ausgestaltung der Erfindung ist vorgesehen, daß die jeweils einander zugeordneten, das Dichtungselement zwischen sich einklemmenden Klemmbackensegmente senkrecht zur Gestaltebene des ringförmigen Dichtungselementes ausfedernd miteinander verbunden sind. Die Federkraft bringt zum einen die erforderliche Klemmkraft auf, insbesondere, wenn die Klemmbackensegmente mit gegeneinander vorspringenden Stegen versehen sind. Andererseits wird die Verformung des Dichtungselementes beim Passieren der Stege während des Einpreßvorganges etwas reduziert.

Die Erfindung betrifft ferner ein Dichtungselement zur Durchführung des erfindungsgemäßen Verfahrens und unter Verwendung der erfindungsgemäßen Vorrichtung. Das Dichtungselement ist gekennzeichnet durch einen Ring aus einem elastomeren Material, der einen umlaufenden, sich zum Innenumfang hin öffnenden Schlitz aufweist. Das elastomere Material kann hierbei eine dichte, aber auch eine zellige Struktur aufweisen. Der in den Ring eingearbeitete umlaufende Schlitz erlaubt es hierbei, diesen auf die Schneiden der Halte- und Preßvorrichtung aufzusetzen, so daß das Dichtungselement beim Einpressen in die abzudichtende Stoßfuge sich nur auf der Schneide abstützt und durch die anschließende Seitenfläche gegen ein Abkippen oder einseitiges Abrollen gesichert ist. Hierdurch ist auch gewährleistet, daß sich beim Einpressen das Dichtungselement in der Fuge nicht verdrillt. In zweckmäßiger Weise ist hierbei vorgesehen, daß der Schlitz sich mindestens bis zur Mittelachse des Ringquerschnitts erstreckt. Das Dichtungselement wird beim Einpressen dann nicht gestaucht, sondern in die Fuge eingezogen, so daß sich bessere Verformungsbedingungen ergeben.

In vorteilhafter weiterer Ausgestaltung des Dichtungselementes ist vorgesehen, daß der Ring in seinem im Außenumfang liegenden Bereich eine sich verjüngende Querschnittskontur aufweist. Dies hat den Vorteil, daß das Dichtungselement in die Stoßfuge über einen kurzen Weg zunächst ohne oder nur mit geringer Verpressung eingeführt und damit zentriert wird und daß, erst nach dem bereits ein Teil des Außenumfanges des Dichtungselementes sich im Fugenquerschnitt befindet, der Rest sich an den Wandungen der Fuge anlegt und das "Einziehen" über die Schneiden der Preßvorrichtung unter Verformung erfolgt.

Der vorstehend verwendete Begriff "Ring" ist im Zusammenhang mit der vorliegenden Erfindung nicht beschränkt auf einen Kreisring. Mit Hilfe der vorliegenden Erfindung ist es möglich, auch bei Rohren mit den üblichen vom Kreisquerschnitt abweichenden Querschnittskonturen einen an diese Kontur entsprechend angepaßten "Ring" nachträglich einzusetzen, da bei entsprechender Ausbildung der Konturen der Klemmbacken und der Halte- und Preßvorrichtung durch die Zuordnung zu der Positioniervorrichtung auch eine eindeutige Zuordnung des Dichtungselementes mit einer von der Kreisform abweichenden Kontur zu der Fuge möglich ist.

Die Erfindung wird anhand schematischer Zeichnungen von Ausführungsbeispielen näher erläuert. Es zeigen:

Fig. 1 einen Längsschnitt durch eine zu sanierende Betonrohrleitung,

Fig. 2 in einer Stirnansicht schematisch den Aufbau der Halte- und Preßvorrichtung,

Fig. 3 in einem perspektivischen Teil-Axialschnitt in größerem Maßstab ein Detail der Halte-und Preßvorrichtung,

Fig. 4 den Vorgang des Einpressens anhand eines Axialschnittes,

Fig. 5 Dichtungselemente in verschiedenen Querschnittsformen.

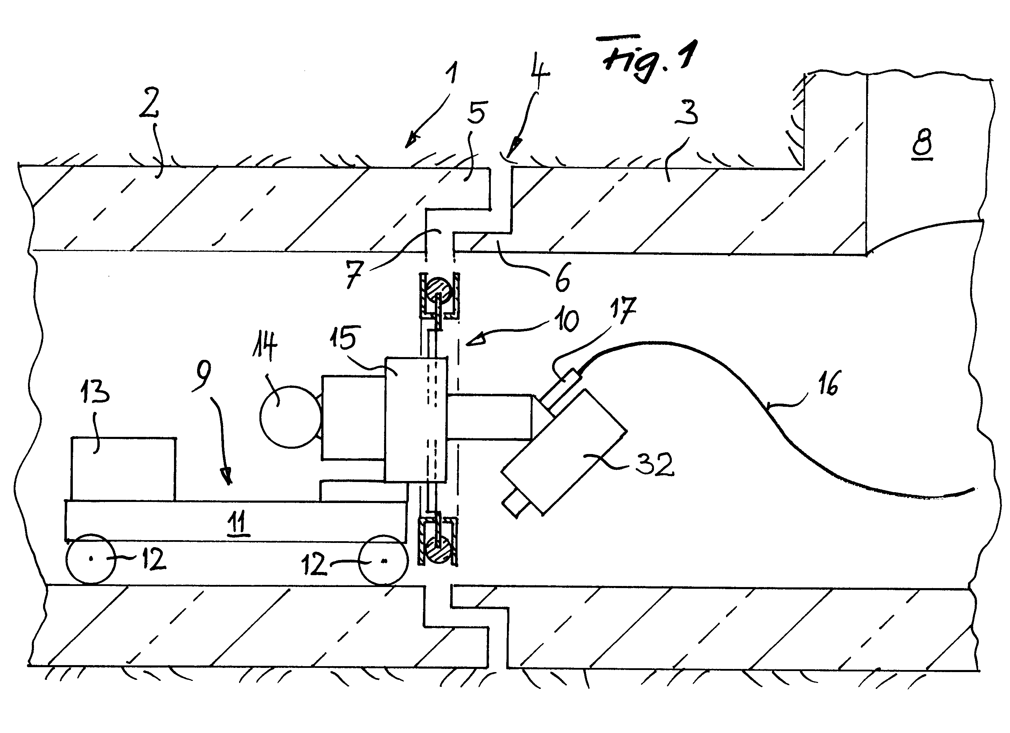

In Fig. 1 ist in einem Längsschnitt eine erdverlegte Betonrohrleitung 1 dargestellt, die in üblicher Weise aus mehreren Rohrstücken 2, 3 zusammengesetzt ist. Die Abmessungen und die Proportionen sind zum besseren Verständnis nicht maßstäblich sondern verzerrt dargestellt. Die Stoßfuge 4 zwischen den beiden Rohrstücken 2, 3 besteht jeweils an dem einen Rohrstück 2 aus einer Glocke 5 und an dem Rohrstück 3 aus einem Spitzende 6, das in die Glocke 5 eingeschoben ist. Wird nun bei einer derartigen Rohrleitung beispielsweise durch eine Inspektion mit Hilfe einer sogenannten Kanal-Fernsehkamera oder aufgrund anderer Überprüfungen festgestellt, daß die alte zwischen Glocke 5 und Spitzende 6 beim Verlegen der Rohrleitung eingebrachte Dichtung undicht geworden ist, dann wird mit Hilfe des hier anzuwendenden Verfahrens zunächst der in den Innenraum des Kanals weisende Fugenteil 7 der Stoßfuge 4 mit Hilfe einer Fräsvorrichtung auf eine vorgegebene Breite und eine vorgegebene Tiefe aufgefräst, so daß ein genau definierter Fugenspalt vorhanden ist.

Von einem Einstiegsschacht 8 oder von einem Sammler aus wird nunmehr in diese nicht begehbare Rohrleitung 1, die einen lichten Innendurchmesser von beispielsweise 400 oder 500 mm mit Kreisquerschnitt hat, eine fernsteuerbare Positioniervorrichtung 9 eingefahren, die mit einer Halte- und Preßvorrichtung 10 zum Einbringen eines ringförmigen Dichtungselementes in die vorbereitete Fuge trägt. Der Aufbau und die Arbeitsweise der Halte- und Preßvorrichtung wird nachstehend noch näher beschrieben werden.

Die Positioniervorrichtung 9 besteht im wesentlichen aus einem Fahrwerk 11, das mit mindestens drei, vorzugsweise vier Rädern 12 versehen ist, die über einen Fahrantriebsmotor 13 angetrieben werden. Da für das Verfahren innerhalb des Kanals keine hohen Kräfte erforderlich sind, kann hierzu ein 12-Volt Elektromotor verwendet werden.

Die Halte- und Preßvorrichtung 10 ist vorzugsweise an einem Ende des Fahrwerks 11, möglichst dicht neben einem Laufradpaar 12 angeordnet. Die Halte- und Preßvorrichtung 10 weist hierbei einen Antriebsmotor 14 auf, der als Ölmotor, bevorzugt jedoch als 12-Volt Elektromotor, ausgebildet ist. Um hier die nötigen Preßkräfte aufzubringen, arbeitet der Antriebsmotor 14 über ein hoch untersetzendes Getriebe 15 mit den bewegbaren Teilen der Halte- und Preßvorrichtung zusammen, so daß auch mit einem derartigen Motor die erforderlichen Preßkräfte aufgebracht werden können.

Auf der dem Fahrwerk 11 abgekehrten Seite ist stirnseitig an der Halte- und Preßvorrichtung 10 eine schwenkbare Fernseh-kamera 32 befestigt, mit deren Hilfe die Positioniervorrichtung 9 genau bis an den abzudichtenden Fugenspalt 7 herangefahren werden kann. Die Energieversorgung für die Antriebsmotoren der Positioniervorrichtung 9 sowie die Fernsehkamera 32 und die Übertragungskabel der Fernsehkamera 32 sind in einer Schleppleitung 16 zusammengefaßt, die über einen lösbaren Stekker 17 stirnseitig an die Halte- und Preßvorrichtung 10 anschließbar ist. Diese Anordnung erlaubt es, die Positioniervorrichtung nur von einem Einstiegsschacht 8 bzw. auch von einem Hauptsammler aus in die zu sanierende Rohrleitung einzufahren. Die Dichtungselemente können jeweils auf die Halte- und Preßvorrichtung 10 nach Abziehen der Schleppleitung 16 aufgelegt werden, wobei es nicht erforderlich ist, die Positioniervorrichtung aus dem Schacht herauszuholen. Diese Arbeiten können im Bereich des Einstiegsschachtes erledigt werden. Auch die Fernsehkamera 32 braucht nicht gelöst zu werden, da die hierfür einzusetzenden Fernsehkameras und die zugehörigen Leuchten so klein gebaut sind, daß das Dichtungselement darüber geschoben werden kann.

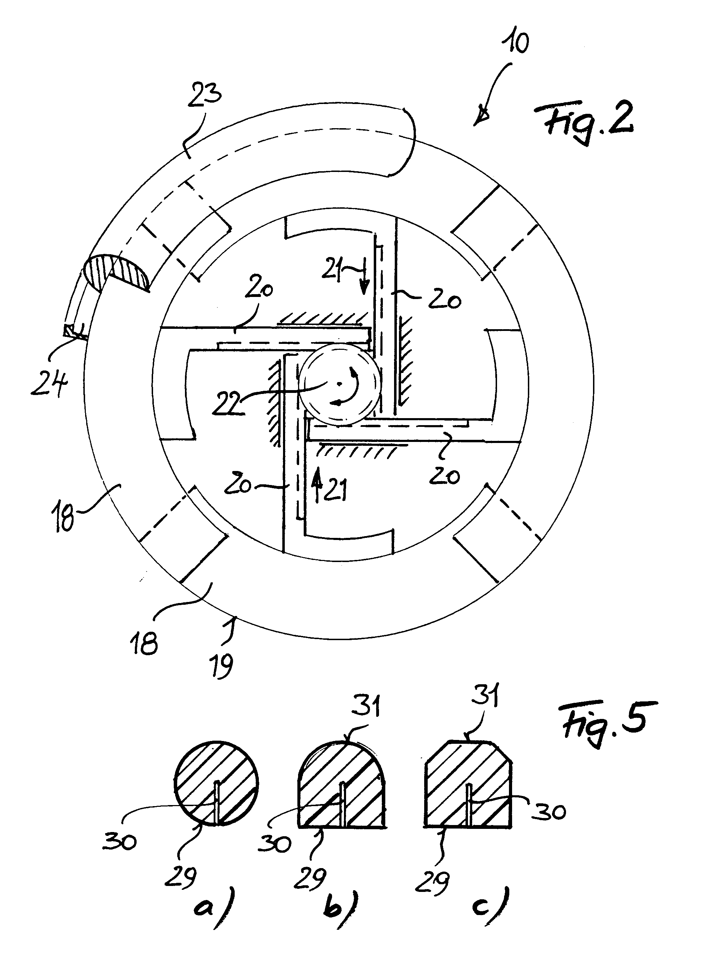

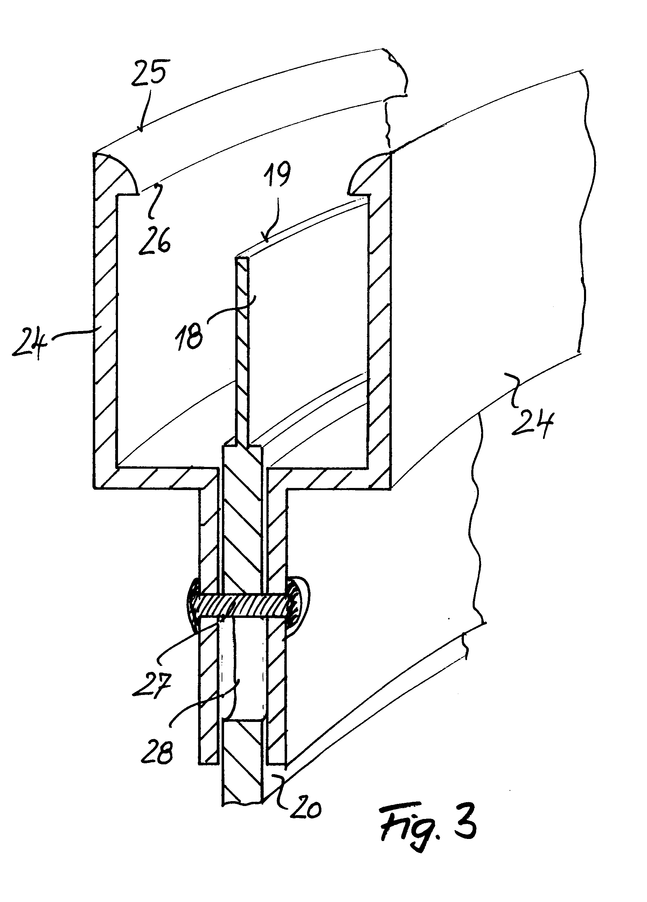

Die in Fig. 1 nur angedeutete Halte- und Preßvorrichtung 10 wird in ihrem Aufbau und in ihrer Funktionsweise nachstehend anhand der Fig. 2, 3 und 4 näher erläutert. Wie die Stirnansicht gemäß Fig. 2 zeigt, weist die Halte- und Preßvorrichtung 10 mehrere sich teilweise überlappende Ringsegmente 18 auf, die, wie der perspektivisch ergänzte Axialschnitt gem. Fig. 3 zeigt, schneidenförmig ausgebildet sind. In Fig. 2 sind die Ringsegmente 18 in ihrer äußeren Endstellung dargestellt, so daß ihre außenliegende Schneidenkante 19 eine Kreisform aufweist. Die Ringsegmente 18 sind über entsprechende Übertragungsmittel 20, beispielsweise in Form von geführten Zahnstangen aus der dargestellten Endstellung radial nach innen (Pfeil 21) bewegbar, so daß sich der Außendurchmesser insgesamt verkleinern läßt. Bei der Verwendung von Zahnstangen, wie dargestellt, wirken diese zusammen mit einem zentralen Antriebsritzel 22, das über den in Fig. 1 dargestellten Antriebsmotor und das vorgeschaltete Getriebe 15 angetrieben wird. Je nach Drehrichtung des Antriebsmotors 14 können dann die Ringsegmente 18 radial nach innen auf einen kleineren Durchmesser zusammengezogen oder aber radial nach außen auf den Enddurchmesser mit hoher Kraft verschoben werden.

Wie in Fig. 2 angedeutet, ist ein ringförmiges, mit einem Schlitz versehenes Dichtungselement 23, das in seinem Aufbau anhand von Fig. 5 näher beschrieben werden wird, sattelförmig auf die schneidenförmig ausgebildeten Ringsegmente 18 aufgesetzt. Das Dichtungselement 23 besteht aus einem elastomeren Material und ist in der dargestellten Position unverspannt. Der Durchmesser des ringförmigen Dichtungselementes 23 ist hierbei so bemessen, daß er dem Durchmesser der abzudichtenden Fuge 7 entspricht. Das Aufbringen auf die schneidenförmigen Ringsegmente 18 kann von Hand vorgenommen werden, da über den Antrieb eine entsprechende Verringerung des Außendurchmessers der Schneidenkante vorgenommen werden kann.

Wie Fig. 3 zeigt, sind zu beiden Seiten der schneidenförmigen Ringsegmente 18 ebenfalls in Ringsegmente unterteilte Klemmbacken 24 angeordnet, die jeweils mit ihrer außenliegenden Kante 25 die Schneidenkante 19 überragen. Der lichte Abstand zwischen den beiden Klemmbacken 24 ist etwas geringer als der unverpreßte Durchmesser eines Dichtungselementes. Im Bereich ihrer Außenumfangskante weisen die Klemmbacken jeweils einen gegen das Dichtungselement vorspringenden Steg 26 auf, wobei der Abstand zwischen den freien Kanten der umlaufenden Stege 26 geringer ist als der Querschnittsdurchmesser des einzubringenden Dichtungselementes. Die gegenüberliegenden Klemmbackensegmente 24 sind beispielsweise über eine Nietverbindung 27 fest miteinander verbunden, wobei der Niet durch ein entsprechendes Langloch 28 im Bereich der Innenkante der Ringsegmente 18 geführt ist, so daß die Klemmbacken 24 gegenüber den Ringsegmenten 18 beschränkt relativ hin- und herbewegbar sind. Die Klemmbacken 24 sind so ausgebildet, daß sie senkrecht zu der Ringebene um ein geringes Maß ausfedern können.

Zum Abdichten einer vorbereiteten Fuge 7 in der zu sanierenden Rohrleitung 1 wird die Positioniervorrichtung 9 wie in Fig. 2 angedeutet mit einem ringförmigen Dichtungselement bestückt. Dies erfolgt in der Weise, daß, wie bereits anhand von Fig. 2 dargestellt, ein Dichtungselement mit seinem Mittelschlitz auf den aus den Ringsegmenten 18 gebildeten Schneidenring von Hand von außen aufgedrückt wird, wobei unter geringfügiger Verformung das Dichtungselement zwischen den zu beiden Seiten der Schneide angeordneten ringförmigen Klemmbackenelementen eingedrückt wird. Die vorspringenden Kanten der Stege 26 liegen hierbei unmittelbar an der Oberfläche des Dichtungselementes an. Werden nun über das Ritzel 22 bei entsprechender Drehrichtung die schneidenförmigen Ringsegmente nach innen gezogen, dann wird das ringförmige Dichtungselement 23 in Umfangsrichtung gestaucht, wobei die Kanten der Stege 26 das Dichtungselement auf der Schneide 18 halten und ein Austreten in radialer Richtung verhindern. Über den Antrieb wird der Durchmesser der Gesamtanordnung so weit vermindert. daß die Halte- und Preßvorrichtung einen gegenüber dem lichten Innendurchmesser des zu sanierenden Rohres geringeren Durchmesser aufweist.

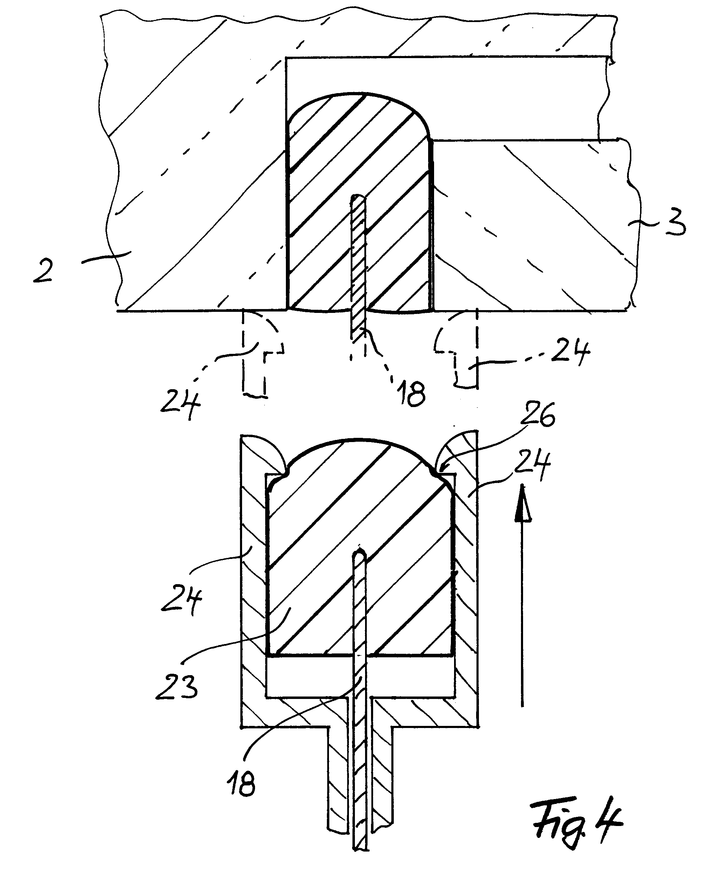

Nunmehr wird die Positioniervorrichtung in Längsrichtung der Rohrleitung bis an die abzudichtende Fuge verfahren, wobei mit Hilfe der Fernsehkamera und eines entsprechenden Monitors im Bereich des Einstiegsschachtes 8 die Halte- und Preßvorrichtung 10 genau in bezug auf die abzudichtende Fuge 7 positioniert wird. Jetzt werden über den Antrieb 14, wie in Fig. 4 strichpunktiert dargestellt, die Schneidensegmente 18 radial nach außen verfahren, wobei die Klemmbacken weiterhin am Dichtungselement 23 anliegen, bis die Außenkanten 25 der Klemmbacken 24 an der Innenwandung des Rohres zu beiden Seiten der Fuge anliegen. Bei der nunmehr erfolgenden weiteren radialen Bewegung der schneidenförmigen Ringsegmente 18 wird das Dichtungselement aus den beiden Klemmbacken herausgedrückt und in die Fuge 7 eingepreßt, bis die in Fig. 4 angedeutete Endposition erreicht ist. Das Dichtungselement wird hierbei senkrecht zu seiner Ringebene zusammengepreßt, wobei je nach Bemessung des Querschnitts eine Verpressung von 20 bis 50% möglich ist, um die geforderte Anpassung der Dichtung an den Wasserdruck zu bewirken.

Wie Fig. 5a, b, c für verschiedene Querschnittsformen von Dichtungselementen zeigt, weisen diese im Bereich ihres Innenumfanges 29 einen Schlitz 30 auf, der sich mindestens bis zur Mittelachse des Querschnittprofils erstreckt. Damit erfolgt bei dem abhand von Fig. 4 beschriebenen Einpressen des Dichtungselementes 23 in die Fuge 7 der Kraftangriff im Bereich der Mittelachse, so daß das Dichtungselement in die Fuge "eingezogen" wird und somit eine Verringerung der Querschnittsbreite von beispielsweise 30%, d.h. um das Maß der Verpressung ohne allzu großen Kraftaufwand möglich ist. Die gesamte Anordnung ist so bemessen, daß bei Erreichen des in Fig. 2 dargestellten größten Durchmessers der Innenumfang des Dichtungselementes 23 fluchtend mit der Innenwandung des abzudichtenden Rohres liegt. Anschließend wird wiederum mit Hife des Antriebsmotors 14 der aus mehreren Ringsegmenten zusammengesetzte Schneidenring radial nach innen zurückgezogen. Da das Einpressen derartiger elastischer Dichtungselemente grundsätzlich mit Gleitmitteln erfolgt, beispielsweise mit Hilfe von Schmierseife oder dergl., die auf die Außenfläche des Ringes aber auch auf die Schneiden aufgetragen sind, kann infolge der höheren Reibung zwischen Dichtungselement und Fugenwandung, trotz des Gleitmittels, die Schneide problemlos aus dem Schlitz 30 herausgezogen werden, ohne daß das Dichtungselement seine Positionierung in der Fuge verändert.

Nachdem der Außendurchmesser der Halte- und Preßvorrichtung 10 entsprechend reduziert worden ist, kann nunmehr die Positioniervorrichtung wieder über den Fahrantrieb zurückgeholt werden und nach Lösen des Kabels 16 ein neues ringförmiges Dichtungselement, wie vorstehend beschrieben, auf die Halte- und Preßvorrichtung 10 im Bereich des Schachtes aufgezogen und anschließend die Positioniervorrichtung an die nächste abzudichtende Fuge nach Anschluß des Kabels 16 verfahren werden.

Da das Dichtungselement nach dem Einpressen in die Fuge in etwa den gleichen Durchmesser einnimmt, den das unverspannt auf die Halte- und Preßvorrichtung aufgesetzte Dichtungselement besitzt, wirken außer den Preßkräften senkrecht zu seiner Gestaltungsebene praktisch keine Zugespannungen in Umfangsrichtung, so daß selbst bei Setzbewegungen des Erdreiches, die ein Öffnen der Fuge um ein gewisses Maß und damit eine entsprechende Reduzierung der Verpressung bewirken, nicht dazu führt, daß das Dichtungselement sich aus der Fuge herauszieht. Da das Dichtungselement mechanisch in die Fuge eingepreßt wird und hierbei die Dichtwirkung ausschließlich durch die Verpressung bewirkt wird, ist es nicht erforderlich, daß die abzudichtende Rohrleitung vollständig trockengelegt wird, insbesondere die vorbereiteten Fugen trocken sind. Diese Abdichtungsmaßnahmen können selbst dann durchgeführt werden, wenn, was praktisch nicht zu vermeiden ist, im Bereich der Rohrsohle ein geringfügiger Abwasserfluß vorhanden ist.

In Fig. 5 sind drei verschiedene Querschnittsformen für derartige Dichtelemente dargestellt. Fig. 5a zeigt einen Rundquerschnitt, Fig. 5b und 5c zeigen einen bevorzugten Querschnitt, der im Bereich seines Außenumfanges 31 eine sich verjüngende Querschnittskontur, beispielsweise eine Halbkreiskontur (Fig. 5b) oder eine trapazförmige Kontur (Fig. 5c) aufweist. Der zum Bereich des Innenumfangs 29 hinweisende Bereich des Dichtungselementes weist eine in etwa rechteckförmige Querschnittskontur auf. Die sich verjüngende Querschnittskontur erleichtert das "Einfädeln" zu Beginn des Preßvorganges, während die ebenflächige Kontur am Innenumfang den Vorteil aufweist, daß der in die Fuge 7 eingelegte Ring mit seiner Innenkontur praktisch fluchtend zum Innendurchmesser des betreffenden Rohres liegt, so daß hier insbesondere im Sohlenbereich Aufstauungen von Feststoffen verhindert werden.

Aus der vorstehenden Beschreibung eines Ausführungsbeispieles ergibt sich, daß Zweckmäßigerweise für jeden gängigen Innendurchmesser derartiger Betonrohrleitungen eine gesonderte Halte- und Preßvorrichtung 10 vorgesehen werden muß. Es ist daher zweckmäßig, wenn die Positioniervorrichtung einschließlich des Antriebes 14 so ausgebildet wird, daß die Halte- und Preßvorrichtung jeweils auswechselbar ist. Hierbei muß dafür Sorge getragen werden, daß jeweils die Längsmittelachse der ringförmigen Halte- und Preßvorrichtung so einjustiert werden kann, daß sie mit der Längsmittelachse des zu sanierenden Rohres zusammenfällt.

Aus der vorstehenden Erläuterung des Einpreßvorganges ist ferner ersichtlich, daß das Fahrwerk der Positioniervorrichtung nicht übermäßig schwer ausgebildet sein muß, da beim Einpreßvorgang die über die Halte- und Preßvorrichtung aufzubringenden Kräfte gleichmäßig radial nach allen Seiten hin wirken, so daß vom Fahrwerk selbst außer dem Rückdrehmoment praktisch keinerlei Kräfte aufzunehmen sind.

Das vorstehend beschriebene Verfahren kann zur Abdichtung von innen her bei allen gängigen Rohrleitungen eingesetzt werden, also nicht nur bei Rohrleitungen aus Beton, sondern auch bei Rohrleitungen aus Steinzeug oder Asbestzement. Das Verfahren kann mit Vorteil auch an Kanälen mit Vortriebsrohren großer und kleiner Nennweite eingesetzt werden, da hier die normalen Dichtungen im Bereich des Außenumfangs liegen, also beim Vortrieb Beschädigungen auftreten können, die nicht kontrollierbar sind. Mit Hilfe des erfindungsgemäßen Verfahrens und unter Anwendung der erfindungsgemäßen Vorrichtung und des Dichtungselementes kann dann ein solcher Vortriebskanal an jeder Stoßfuge zusätzlich von innen her abgedichtet werden, so daß eine Gewährleistung möglich ist.

Die Anwendung ist auch an begehbaren Rohrleitungen möglich, auch wenn der Einsatz bevorzugt an nichtbegehbaren Rohrleitungen erfolgt.

**Patentansprüche**

1. Verfahren zum Abdichten von Stoßfugen von innen her an verlegten Rohrleitungen, insbesondere Betonrohrleitungen, **dadurch gekennzeichnet**, daß zum Abdichten der vorbereiteten Stoßfuge zwischen zwei Rohrstücken jeweils ein elastisch verformbares ringförmiges Dichtungselement mit einem Außendurchmesser, der im unverspannten Zustand im wesentlichen dem Durchmesser der abzudichtenden Stoßfuge entspricht, in radialer Richtung auf einen Außendurchmesser zusammengedrückt wird, der kleiner ist als der lichte Innendurchmesser des Rohres, daß das Dichtungselement in dieser Form gehalten und in die Rohrleitung eingeschoben wird und daß das Dichtungselement an der abzudichtenden Stoßfuge durch Aufbringen einer im wesentlichen über den Innenumfang radial nach außen einwirkenden Kraft in die Stoßfuge eingepreßt wird.

2. Verfahren nach Anspruch 1, dadurch gekennzeichnet, daß eine Klemmkraft auf das Dichtungselement senkrecht zu seiner durch seine Ringform definierten Gestaltebene beim radialen Zusammendrücken wirkt.

3. Verfahren nach Anspruch 1 oder 2, dadurch gekennzeichnet, daß die Radialkraft zum Einpressen des Dichtungselementes im Bereich seiner durch seine Querschnittskontur definierten Mittelachse auf das Dichtungselement einwirkt.

4. Verfahren nach einem der Ansprüche 1 bis 3, dadurch gekennzeichnet, daß das ringförmige Dichtungselement durch Einpressen in einen Formkonus auf den kleinen Außendurchmesser radial zusammengedrückt wird.

5. Vorrichtung zur Durchführung des Verfahrens nach den Ansprüchen 1 bis 4, zum Abdichten von Stoßfugen an nicht begehbaren, verlegten Rohrleitungen, insbesondere Betonrohrleitungen, jeweils mit einem elastisch verformbaren ringförmigen Dichtungselement, dadurch gekennzeichnet, daß an einer in der Rohrleitung (1) längsbewegbare Positioniervorrichtung (9) im Abstand zueinander angeordnete und gegeneinander bewegbare, im wesentlichen ringförmige Klemmbacken (24) angeordnet sind, daß die Klemmbacken (24) mit Mitteln zum Aufbringen einer Klemmkraft versehen sind, daß zwischen den Klemmbacken (24) eine ringförmige Vorrichtung (10) zum Halten und zum Einpressen des Dichtungselementes (23) angeordnet ist, die gleichförmig allseitig radial bewegbar ausgebildet ist und mit einem Antrieb (14) in Verbindung steht.

6. Vorrichtung nach Anspruch 5, dadurch gekennzeichnet, daß die Halte- und Preßvorrichtung (10) mehrere sich teilweise überlappende Ringsegmente (18) aufweist.

7. Vorrichtung nach Anspruch 5 oder 6, dadurch gekennzeichnet, daß die Ringsegmente (18) der Halte- und Preßvorrichtung (10) zumindest in ihrem dem Dichtungselement zugekehrten Bereich schneidenförmig ausgebildet sind.

8. Vorrichtung nach Anspruch 7, dadurch gekennzeichnet, daß jeweils benachbarte schneidenförmige Teile sich teilweise überlappen.

9. Vorrichtung nach einem der Ansprüche 5 bis 10, dadurch gekennzeichnet, daß die ringförmigen Klemmbacken (24) jeweils in Ringsegmente unterteilt sind und daß die Klemmbackensegmente (24) gegenüber den Ringsegmenten (18) der Halte- und Preßvorrichtung (10) in radialer Richtung relativ bewegbar gehalten sind.

10. Dichtungselement nach einem der Ansprüche 5 bis 9, dadurch gekennzeichnet, daß die jeweils einander zugeordneten, das Dichtungselement (23) zwischen sich einklemmenden Segmente der Klemmbacken (24) im Bereich ihrer Außenumfangskante (25) jeweils einen gegen das Dichtungselement (23) vorspringenden Steg (26) aufweisen.

11. Dichtungselement nach einem der Ansprüche 5 bis 10, dadurch gekennzeichnet, daß die jeweils einander zugeordneten, das Dichtungselement (23) zwischen sich einklemmenden Klemmbacken (24) senkrecht zur Gestaltebene des ringförmigen Dichtungselementes (23) ausfedernd miteinander verbunden sind.

12. Dichtungselement zur Durchführung des Verfahrens nach den Ansprüchen 1 bis 11, gekennzeichnet durch einen Ring aus einem elastomeren Material, der einen umlaufenden, sich zum Innenumfang hin öffnenden Schlitz (30) aufweist.

**13.** Dichtungselement nach Anspruch 12, dadurch gekennzeichnet, daß der Schlitz (30) sich mindestens bis zur Mittelachse des Ringquerschnitts erstreckt.

**14.** Dichtungselement nach Anspruch 12 oder 13, dadurch gekennzeichnet, daß der am Außenumfang (31) liegende Bereich des Ringes eine sich verjüngende Querschnittskontur aufweist.

**15.** Dichtungselement nach den Ansprüchen 12 bis 14, dadurch gekennzeichnet, daß der am Innenumfang (29) liegende Bereich des Ringes eine in etwa rechteckförmige Querschnittskontur aufweist.

*Fig.1*

EP 0 467 024 A1

Fig.2

Fig.5

Fig. 3

Fig 4

**Europäisches Patentamt**

# EUROPÄISCHER RECHERCHENBERICHT

Nummer der Anmeldung

## EP 91 10 6305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 759 476  (WEGNER & CO.)<br>* Figuren *<br>– – – | 1,5 | F 16 L 55/162 |
| A | US-A-3 960 395  (CIRULE et al.)<br>* Zusammenfassung; Figuren *<br>– – – | 1,5 | |
| A | GB-A-2 184 810  (INSITUFORM GROUP LTD)<br>– – – – – | | |

| | RECHERCHIERTE SACHGEBIETE (Int. Cl.5) |
|---|---|
| | F 16 L |

Der vorliegende Recherchenbericht wurde für alle Patentansprüche erstellt

| Recherchenort | Abschlußdatum der Recherche | Prüfer |
|---|---|---|
| Den Haag | 17 Oktober 91 | BARTSCH A.W. |